Europäisches Patentamt

European Patent Office

Office européen des brevets

(11) Veröffentlichungsnummer: **0 420 079 A1**

## (12) EUROPÄISCHE PATENTANMELDUNG

(21) Anmeldenummer: 90118232.9

(22) Anmeldetag: 22.09.90

(51) Int. Cl.5: **F23Q 7/00**

(30) Priorität: 29.09.89 DE 3932604

(43) Veröffentlichungstag der Anmeldung:
**03.04.91 Patentblatt 91/14**

(84) Benannte Vertragsstaaten:
**DE ES FR GB IT**

(71) Anmelder: **SCHOELLER & CO.**
**Elektrotechnische Fabrik GmbH & Co.**
**Mörfelder Landstrasse 115-119 Postfach 70**
**09 54**
**W-6000 Frankfurt am Main(DE)**

(72) Erfinder: **von Galsberg, Alexander**
**Goethestrasse 26**
**W-7141 Beilstein(DE)**
Erfinder: **Fischer, Alexander**
**Am Krämersrain 17**
**W-6380 Bad Homburg(DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1(DE)**

(54) **Elektrischer Zigarrenanzünder.**

(57)
2. Der Erfindung liegt die Aufgabe zugrunde, einen elektrischen Zigarrenanzünder mit einer Überlastschutzeinrichtung anzugeben, welche nach einer Abschaltung durch Überlast sich nicht mehr selbsttätig einschaltet.

3. Diese Aufgabe Wird durch den Einsatz einer Bimetallschnappscheibe (7) in der Überlastschutzeinrichtung (4) gelost, welche bei Überschreiten einer Abschalttemperatur sprunghaft von einer Form (I) in eine zweite stabile Form (II) wechselt und diese Form (I) auch nach dem Abkuhlen beibehalt. Die Überlastschutzeinrichtung (4) muß mechanisch zurückgestellt werden. Diese Rückstellung kann gemäß vorteilhafter Ausgestaltungen auch ohne Werkzeug geschehen.

Fig. 6

# ELEKTRISCHER ZIGARRENANZÜNDER

Die Erfindung bezieht sich auf einen elektrischen Zigarrenanzünder nach dem Oberbegriff des Anspruchs 1.

Ein solcher Zigarrenanzünder ist aus der DE-OS 27 55 620 bekannt. Er besteht aus einer Steckdose, die beispielsweise im Armaturenbrett eines Fahrzeuges angeordnet werden kann, und einem Anzünderstecker, der in die Steckdose gesteckt Wird. Die Steckdose des Zigarrenanzünders dient im Fahrzeug außerdem als Schnittstelle zwischen dem Bordnetz und Zubehöreinrichtungen, z.B. Lampen oder elektrisch angetriebene Werkzeuge, die mit Hilfe von Zubehörsteckern an diese Steckdose angeschlossen werden können.

Zigarrenanzünder enthalten eine betriebsmäßige Abschaltvorrichtung, welche einen durch eine Glühspirale in einem Glühspiralennapf des Anzündersteckers fließenden Strom abschalten, Wenn die gewünschte Temperatur der Glühspirale erreicht ist.

Der aus dem Stand der Technik bekannte Zigarrenanzünder enthält darüberhinaus eine Überlastschutzeinrichtung, die bei einer Überhitzung, beispielsweise bedingt durch ein Versagen der betriebsmäßigen Abschaltvorrichtung, eine Unterbrechung des Stromkreises herbeiführt. Die Überlastschutzeinrichtung spricht auch auf einen zu hohen elektrischen Strom, z.B. einen Kurzschlußstrom, an. Die Überlastschutzeinrichtung enthält nämlich eine im elektrischen Stromkreis angeordnete Bimetallschnappscheibe, die sowohl bei Wärmezufuhr von außen als auch bei innerer Erwärmung aufgrund ihres elektrischen Widerstandes ihre Form ändert und den Stromkreis unterbricht.

Die Überlastschutzeinrichtung kann im Anzünderstecker angeordnet sein oder in der Steckdose. Eine Anordnung in der Steckdose hat den Vorteil, daß auch im Falle des Anschlusses einer Zubehöreinrichtung ein Überstrom erfaßt und abgeschaltet wird.

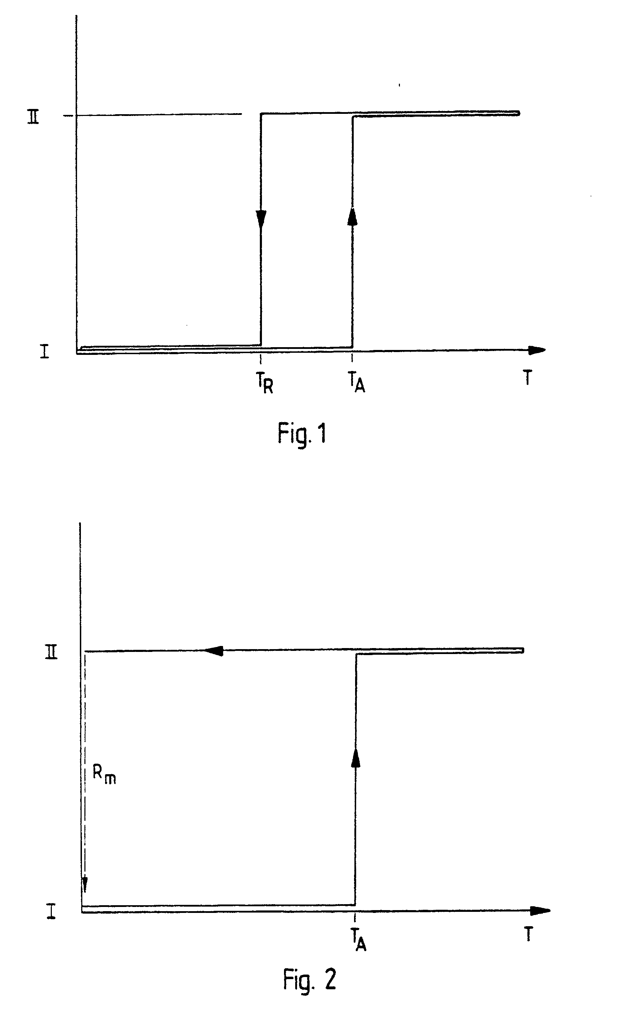

Die Überlastschutzeinrichtung des bekannten Zigarrenanzünders enthält eine Bimetallscheibe, die eine in Fig. 1 dargestellte Charakteristik hat. Aufgrund einer der Bimetallscheibe inhärenten mechanischen Vorspannung behält die Bimetallscheibe bei zunehmender Temperatur T eine Form I und schnappt nach Erreichen einer definierten Abschalttemperatur $T_A$ in einen zweiten stabilen Zustand, nämlich eine Form II um. Beim Abkühlen ändert die Bimetallscheibe nach Unterschreiten einer Rückstelltemperatur $T_R$ Wieder plötzlich ihre Form, d.h. sie nimmt wieder die Form I an.

Da die Bimetallschnappscheibe als Schaltelement in den Stromkreis eingefügt ist, wird der Stromkreis im Fall einer auftretenden Überlast geöffnet, sobald die Abschalttemperatur $T_A$ überschritten ist, und wiederein geschaltet, wenn sich die Bimetallschnappscheibe auf die Rückstelltemperatur $T_R$ abgekühlt hat. Eine Überlast wird somit nicht dauerhaft abgeschaltet, sondern es erfolgt in Zeitintervallen eine erneute Aufheizung. In der genannten Druckschrift wird zu diesem Schaltverhalten der Überlastschutzeinrichtung ausgeführt, daß die während der Einschaltzeiten herbeigeführten Temperaturen nicht so hoch seien, daß ein Brand verursacht werden könnte. Trotzdem kann es unerwünscht oder gefährlich sein, mehrmals den Strom zu einem nicht ordnungsgemäßen Stromverbraucher durchzuschalten, zumindest wird in unerwünschter Weise die Batterie des Bordnetzes entladen.

Der Erfindung liegt ausgehend vom vorgenannten Stand der Technik und unter Vermeidung der dort genannten Nachteile die Aufgabe zugrunde, eine Überlastschutzeinrichtung für einen elektrischen Zigarrenanzünder anzugeben, bei welcher nach erstmaliger Abschaltung der Überlast eine selbsttatige Wiedereinschaltung der Überlast auf Dauer ausgeschlossen ist.

Diese Aufgabe wird bei einem Zigarrenanzünder nach dem Oberbegriff des Anspruchs 1 durch dessen kennzeichende Merkmale gelöst.

Vorteilhafte Ausgestaltungen sind in Unteransprüchen angegeben.

Mit der Erfindung wird vorgeschlagen, in die Überlastschutzeinrichtung eine Bimetallscheibe einzusetzen, die eine in Fig. 2 dargestellte Charakteristik aufweist. Wenn die Temperatur der Bimetallscheibe steigt, wechselt die Scheibe sprunghaft ihren Zustand von einer Form I in einen mit Form II bezeichneten zweiten stabilen Zustand. Beim Abkühlen behält die Bimetallschnappscheibe diese Form II. Sie kann nur unter Aufwendung einer äußeren Kraft, also durch mechanische Rückstellung in die Form I gebracht werden. Diese mechanische Rückstellung ist in Fig. 2 mit einer gestrichelten Linie $R_m$ angedeutet. Die erfindungsgemäße Überlastschutzeinrichtung hat den Vorteil, daß nach einer Abschaltung einer Überlast keine selbsttätige Wiedereinschaltung erfolgt. Wie nachstehend noch ausführlicher dargelegt ist, kann der Zigarrenanzünder so ausgeführt werden, daß die Rückstellung nur mit Hilfe eines Werkzeuges vorgenommen werden kann. Sie kann aber auch so ausgeführt werden, daß die Rückstellung beim Einstecken des Anzündersteckers oder eines Zubehörsteckers in die Steckdose - wiederum je nach gewählter Ausgestaltung - bewußt oder unbewußt erfolgt. Außerdem kann die Überlastschutzeinrichtung in der Steckdose oder im Anzünderstecker angeordnet sein.

Gemäß einer ersten mit geringem Aufwand herstellbaren Ausführungsform der Steckdose ist die Bimetallschnappscheibe direkt unterhalb einem für die betriebsmäßige Abschaltung vorgesehenen Bimetallbügel angeordnet und zugleich mit diesem im Bodenbereich der Steckdose befestigt.

Nach einer zweiten Ausgestaltung ist die Bimetallschnappscheibe im Bereich des Steckdosenbodens gekapselt angeordnet, so daß sie gegen Verschmutzung und Manipulation besser geschützt ist. Beide Ausführungen der Steckdose erfordern eine Rückstellung der Bimetallschnappscheibe mit Hilfe eines einfachen Werkzeuges.

Gemäß einer besonders vorteilhaften Ausgestaltung ist eine Steckdose mit einer Beleuchtungshülse vorgesehen, wobei mit Hilfe einer innerhalb der Beleuchtungshülse gegen eine Federkraft verschiebbare Steckdose eine Rückstellung der Bimetallschnappscheibe ohne ein Werkzeug erreicht werden kann. Der Rückstellmechanismus wirkt sowohl beim Einstecken eines Anzündersteckers als auch beim Einstecken eines Zubehörsteckers.

Schließlich wird eine vorteilhafte Ausgestaltung eines Anzündersteckers vorgeschlagen, der eine erfindungsgemäße Überlastschutzeinrichtung enthält, welche ohne Werkzeug einfach durch besonders tiefes Eindrücken des Anzünderbetätigungsknopfes rückgestellt werden kann. Ein solcher Anzünderstecker kann in Verbindung mit jeder handelsüblichen Steckdose zum Einsatz kommen.

Eine ausführliche Beschreibung der Erfindung erfolgt anhand von in der Zeichnung dargestellten Ausführungsbeispielen.

Es zeigen:

Fig. 1 Charakteristik der Bimetallschnappscheibe, die in einem elektrischen Zigarrenanzünder mit Überlastschutzeinrichtung gemäß dem Stand der Technik eingesetzt ist,

Fig. 2 Charakteristik der Bimetallschnappscheibe die im erfindungsgemäßen Zigarrenanzünder eingesetzt ist,

Fig. 3 und 4 Steckdose mit Überlastschutzeinrichtung,

Fig. 5 Steckdose mit gekapselter Überlastschutzeinrichtung,

Fig. 6 Steckdose mit Beleuchtungshülse und einer ohne Werkzeug rückstellbaren Überlastschutzeinrichtung,

Fig. 7 Anzünderstecker mit einer ohne Werkzeug rückstellbaren Überlastschutzeinrichtung.

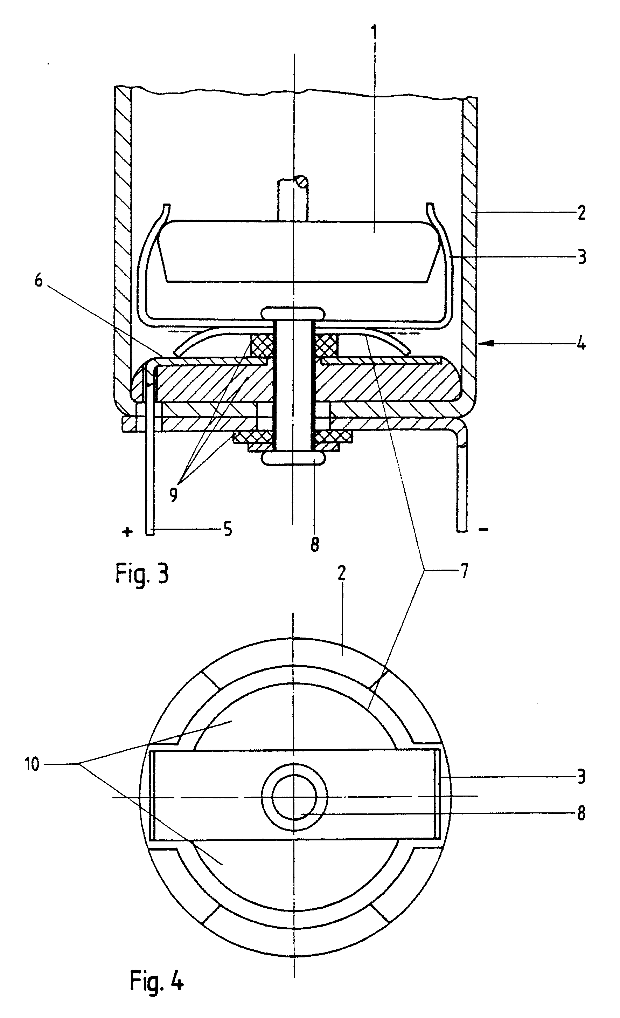

Fig. 3 zeigt einen Schnitt durch einen nur ausschnittsweise dargestellten elektrischen Zigarrenanzünder. Ein Anzünderstecker ist dabei lediglich durch seinen Glühspiralennapf 1 angedeutet, welcher in einer metallischen Steckdose 2 durch einen Bimetallbügel 3 gehalten und kontaktiert wird. Der Bimetallbügel 3 bildet eine betriebsmäßige Abschalteinrichtung und führt den Pluspol eines Bordnetzes an den Anzünderstecker. Der Minuspol wird in bekannter Weise über die Steckdose 2 an den Anzünderstecker herangeführt. Der Pluspol ist über eine Überlastschutzeinrichtung 4 von einem Pluspolanschluß 5 über einen Pluskontakt 6 und eine Bimetallschnappscheibe 7 an den Bimetallbügel 3 herangeführt. Die mit ausgezogenen Linien dargestellte Bimetallschnappscheibe 7 befindet sich in der Betriebsstellung (Form I). Mit gestrichelten Linien ist die Abschaltstellung (Form II) angedeutet. Mit dem Bezugszeichen 8 ist ein Befestigungsniet bezeichnet. Isolierteile sind mit dem Bezugszeichen 9 versehen.

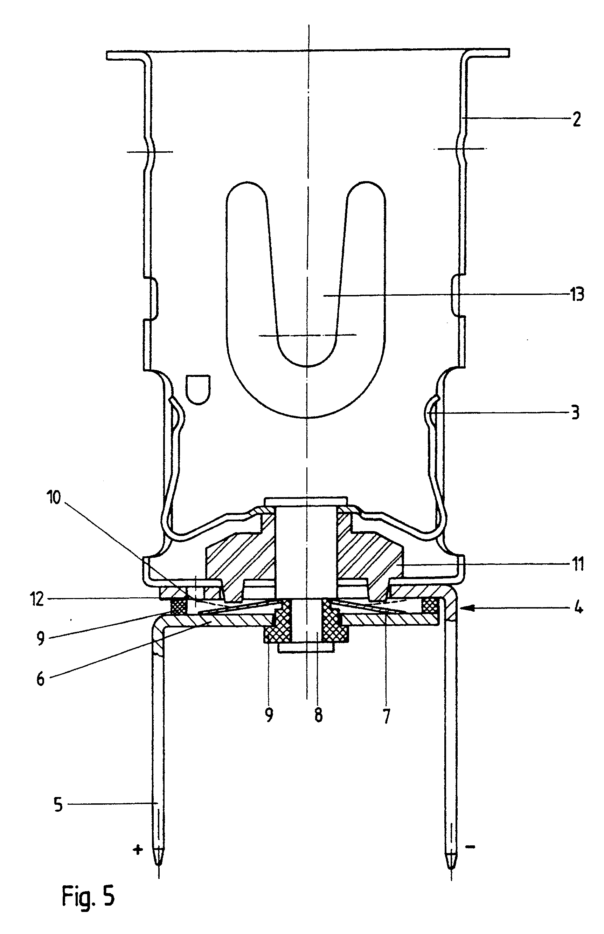

Fig. 4 zeigt einen Blick in die leere Steckdose 2, also ohne Anzünderstecker. Außer dem Bimetallbügel 3 und dem Befestigungsniet 8 sind Flächen 10 der Bimetallschnappscheibe 7 zu erkennen, die zugänglich sind für ein Werkzeug zur Rückstellung der Bimetallschnappscheibe 7.

Fig. 5 zeigt eine zweite Ausführung einer Steckdose 2 mit Überlastschutzeinrichtung 4. Übereinstimmende Bauteile sind in den Figuren der Zeichnung jeweils mit gleichem Bezugszeichen versehen. Im Unterschied zur Anordnung gemäß Fig. 3 enthält die in Fig. 5 dargestellte Anordnung ein Formteil 11, mit welchem die Bimetallschnappscheibe 7 gekappselt ist. Im Bodenbereich der Steckdose 2 ist mindestens eine Rückstellöffnung 12 vorgesehen, durch welche mit einem geeigneten Werkzeug, z.B. einem Stift, auf eine zugängliche Fläche 10 der Bimetallschnappscheibe 7 gedrückt werden kann, um die Bimetallschnappscheibe 7 in ihre Betriebsstellung zurückzustellen. An der Steckdose 2 sind außerdem Rastfedern 13 zu erkennen, die zum Einrasten des Steckers dienen.

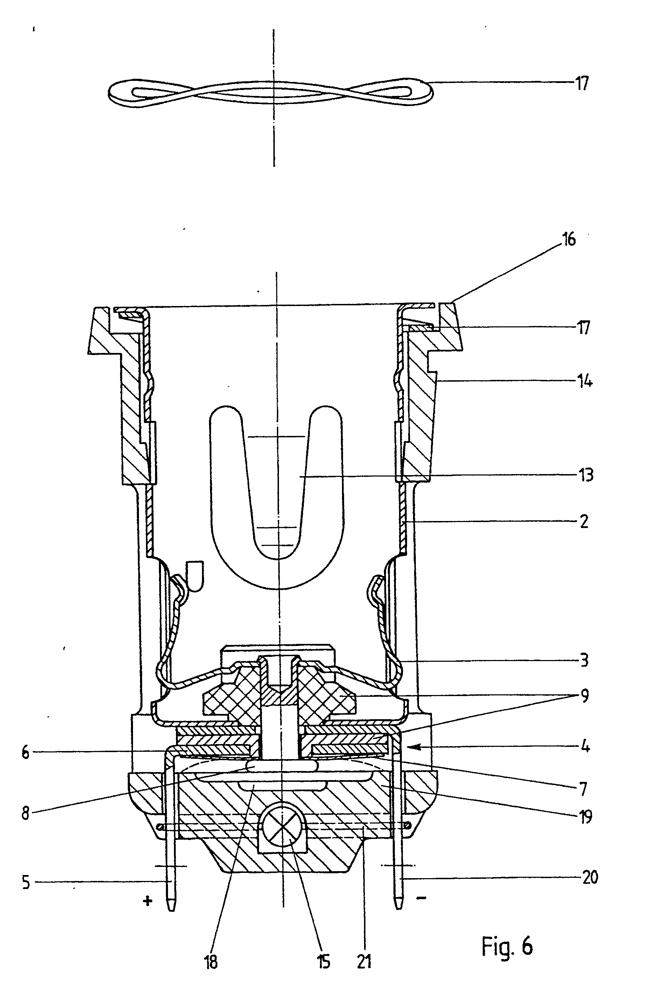

Fig. 6 zeigt einen Schnitt durch eine metallische Steckdose 2, die von einer nichtmetallischen Beleuchtungshülse 14 umgeben ist. Die Beleuchtungshülse 14 leitet Licht von einer Glühlampe 15, die im Boden der Beleuchtungshülse 14 angeordnet ist, zu einem z.B. bei Anordnung des Zigarrenanzünders in einem Armaturenbrett dort sichtbaren Beleuchtungsring 16. Die Bimetallschnappscheibe 7 schließt in der dargestellten Betriebsstellung einen Strompfad vom Pluspolanschluß 5 über den Pluskontakt 6 und Niet 8 zu dem Bimetallbügel 3. Im Überlastfall schnappt die Bimetallscheibe gegen den Boden der Beleuchtungshülse 14 und unterbricht damit die elektrische Verbindung zwischen der Bimetallschnappscheibe 7 und dem Pluskontakt 5.

Zur Rückstellung der Bimetallschnappscheibe 7 wird durch axialen Druck beim Einstecken eines Steckers, z.B. des Anzündersteckers, die Steckdose 2 innerhalb der Beleuchtungshülse 14 in Richtung zum Boden der Beleuchtungshülse 14 verschoben. Dabei muß die Federkraft einer Wellscheibe 17 überwunden werden. Die Wellscheibe 17 ist zur Verdeutlichung noch getrennt dargestellt. Beim Rückstellvorgang wird die gesamte Steckdose 2 innerhalb.der Beleuchtungshülse 14 verschoben, bis der Niet 8 in einer Vertiefung 18 im Boden der Beleuchtungshülse 14 aufliegt. Dabei wird über eine Randfläche 19 in der Bodenebene der Beleuchtungshülse 14 ein Druck auf einen Randbereich der Bimetallschnappscheibe 7 ausgeübt, wodurch die Rückstellung bewirkt wird. Damit die Steckdose 2 innerhalb der Beleuchtungshülse 14 axial bewegt werden kann, muß der Pluspolanschluß 5 und ein Minuspolanschluß 20, welche fest mit der Steckdose 2 verbunden sind, innerhalb des Bodens der Beleuchtungshülse 14 gleiten konnen. Selbstverständlich müssen auch Anschlüsse 21 für die Glühlampe 15 entsprechend flexibel ausgebildet oder z.B. in einer Nut beweglich sein.

Wird eine Wellscheibe 17 mit geringer Federkraft gewählt, so wird die Steckdose 2 bei jedem Einstecken eines Steckers, aufgrund der dabei in axialer Richtung aufzubringenden Kraft, die erforderlich ist, um ein Einrasten des Steckers zu erzielen, innerhalb der Beleuchtungshülse 14 verschoben und ggf. eine Rückstellung der Bimetallschnappscheibe 7 herbeigeführt.

Wenn eine solche vom Benutzer unbewußt herbeigeführte Rückstellung unerwünscht ist, kann eine Wellscheibe 17 gewählt werden, deren Federkraft deutlich über der erforderlichen Kraft zum Einstecken eines Steckers und auch der erforderlichen Kraft zum Einschalten der Glühspirale in einem Anzünderstecker liegt. Eine Rückstellung der Bimetallschnappscheibe erfordert dann einen besonders hohen Druck auf einen in der Steckdose befindlichen Stecker.

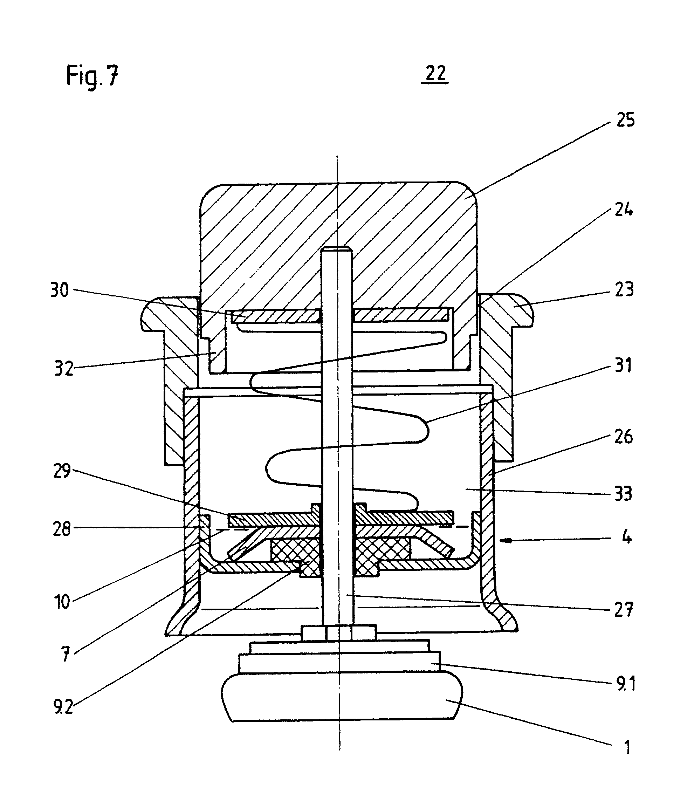

Fig. 7 zeigt einen Anzünderstecker 22, der eine Überlastschutzeinrichtung 4 enthält. Der Anzünderstecker 22 weist einen elektrisch isolierten Griff 23 mit einer Bohrung 24 auf, in welcher ein Betätigungsknopf 25 gleitet. Mit dem Griff 23 ist ein metallischer Hohlzylinderteil 26 verbunden, welcher in der nicht dargestellten Steckdose einen Kontakt zum Minuspol herstellt. Der Betätigungsknopf 25 ist über einen Bolzen 27 mechanisch mit dem Glühspiralennapf 1 verbunden. Der metallische Glühspiralennapf 1 ist mit Hilfe eines ersten Isolierteils 9.1 elektrisch vom metallischen Bolzen 27 isoliert. Eine nicht dargestellte Glühspirale innerhalb des Glühspiralennapfs 1 ist mit einem Ende der Spirale mit dem Glühspiralennapf 1 verbunden und mit den anderen Ende der Spirale mit dem Bolzen 27. Der Glühspiralennapf 1 wird in einer Steckdose mit dem Pluspol verbunden.

Die Überlastschutzeinrichtung 4 schaltet den Minuspol ab und besteht aus einem becherförmigen metallischen Minuskontakt 28, der von dem Hohlzylinderteil 26 umgeben und mit diesem fest verbunden ist. Der Minuskontakt 28 hat im Becherboden eine zentrische Bohrung, durch welche der Bolzen 27 mit Hilfe eines zweiten Isolierteils 9.2 elektrisch isoliert durchgeführt ist. Oberhalb vom zweiten Isolierteil 9.2 ist eine Bimetallschnappscheibe 7 angeordnet, welche in ihrer gezeigten Einschaltstellung den becherförmigen Minuskontakt 28 berührt. Die mit einer Bohrung zur Durchführung des Bolzens 27 versehene Bimetallschnappscheibe 7 ist an einer metallischen Laufscheibe 29 befestigt, welche ebenfalls eine Bohrung hat. An der Unterseite des Betätigungsknopfs 25 ist eine Metallscheibe 30 angeordnet und mit dem durchgeführten Bolzen 27 elektrisch leitend verbunden. Zwischen dieser Metallscheibe 30 und der Laufscheibe 29 ist eine konische Drückfeder 31 angeordnet. Die Zuführung des Minuspols zur Glühspirale erfolgt somit vom Hohlzylinderteil 26 über den Minuskontakt 28, die Bimetallschnappscheibe 7, die Laufscheibe 29, die Drückfeder 31, die Metallscheibe 30 und den Bolzen 27 zum Glühspiralenanschluß innerhalb des Glühspiralennapfes 1.

Zur betriebsmäßigen Betätigung des Zigarrenanzünders wird der Betätigungsknopf 25 gagen die Kraft der Drückfeder 31 in den Griff 23 eingedrückt bis der Glühspiralennapf 1 in der nicht dargestellten Steckdose einrastet.

Bei einer auftretenden Überlast schnappt die Bimetallscheibe 7 in die gestrichelt dargestellte Abschaltstellung und unterbricht den Minusstrompfad. Um die Überlastschutzeinrichtung 4 nach einer Abschaltung rückzustellen, wird der Anzünderstecker 22 aus der Steckdose genommen und durch tiefes Eindrücken des Betätigungs knopfes 25 die abgekühlte Bimetallschnappscheibe in ihre Einschaltstellung zurückgestellt. Wenn der Betätigungsknopf 25 tief eingedrückt wird, legen sich die Windungen der konischen Druckfeder 31 spiralförmig nebeneinander, so daß die Druckfeder 31 nur noch die Höhe der Federdrahtdicke hat. An der Unterseite des Betätigungsknopfes 25 ist am Rand eine ringförmige Anformung 32 vorhanden, welche im Falle des tief eingedrückten Betätigungsknopfes 25 durch einen Zwischenraum 33 zwischen der Laufscheibe 29 und dem Minuskontakt 28 greift und auf den Rand der Bimetallschnappscheibe 7 drückt, wodurch diese umschnappt.

Die jeweils angegebene Polung bezieht sich auf die übliche Gestaltung des Bordnetzes eines Fahrzeugs, wobei der Minuspol mit Masse verbunden ist. Die Polung kann selbstverständlich auch umgekehrt gewählt werden.

## Ansprüche

1. Elektrischer Zigarrenanzünder, der aus einer vorzugsweise im Armaturenbrett eines Kraftfahrzeuges zu installierenden Steckdose und einem darin einsteckbaren Anzünderstecker besteht, außer einer Abschalteinrichtung für eine betriebsmäßige Abschaltung der Aufheizung einer Glühspirale im Anzünderstecker zusätzlich eine Überlastschutzeinrichtung enthält, welche sowohl auf einen Überlaststrom als auch auf eine Übertemperatur anspricht, und dessen Überlastschutzeinrichtung eine im elektrischen Stromkreis angeordnete Bimetallschnappscheibe enthält, welche im Überlastfall sich erwärmt und aus einer Betriebsstellung (Form I) in eine Abschaltstellung (Form II) umschnappt und damit den Stromkreis öffnet, dadurch gekennzeichnet, daß die Bimetallschnappscheibe (7) beim Abkühlen nicht selbsttätig in ihre Betriebsstellung (Form I) zurückkehrt.

2. Elektrischer Zigarrenanzünder nach Anspruch 1, dadurch gekennzeichnet, daß die Bimetallschnappscheibe (7) in der Steckdose (2) unmittelbar unterhalb von einem Bimetallbügel (3), der für die betriebsmäßige Abschaltung vorhanden ist, angeordnet ist und in Verbindung mit einem Pluskontakt (6), der mit einem durch die Formänderung der Bimetallschnappscheibe (7) bestimmten Abstand unterhalb der Bimetallschnappscheibe (7) angeordnet ist, die Überlasteinrichtung (4) bildet.

3. Elektrischer Zigarrenanzünder nach Anspruch 2, dadurch abgewandelt, daß zwischen dem Bimetallbügel (3) und der Bimetallschnappscheibe (7) ein Formteil (11) zur Kapselung der Überlastschutzeinrichtung angeordnet ist.

4. Elektrischer Zigarrenanzünder nach Anspruch 2 oder 3, dadurch gekennzeichnet, daß die Steckdose (2) in einer Beleuchtungshülse (14) axial verschiebbar angeordnet ist und Mittel (17,18,19) für die Rückstellung einer in Abschaltstellung befindliche Bimetallschnappscheibe (7) durch axiales Verschieben der Steckdose (2) in der Beleuchtungshülse (14) gegen eine Federkraft vorgesehen sind.

5. Elektrischer Zigarrenanzünder nach Anspruch 1, dadurch gekennzeichnet, daß die Überlastschutzeinrichtung (4) im Anzünderstecker (22) angeordnet ist und Mittel (22,23) für die Rückstellung der Überlastschutzeinrichtung (4) durch tiefes Eindrücken eines Betätigungsknopfes (25) am Anzünderstecker (22) vorgesehen sind.

Fig. 1

Fig. 2

Fig. 3

Fig. 4

Fig. 5

Fig. 6

**Fig.7**   <u>22</u>

**Europäisches Patentamt**

**EUROPÄISCHER RECHERCHENBERICHT**

Nummer der Anmeldung

**EP 90 11 8232**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 637 799 (WOOD) <br> * das ganze Dokument * <br> – – – | 1,5 | F 23 Q 7/00 |
| Y | FR-A-1 541 896 (CASCO) <br> * Seite 3, linke Spalte, Absatz 4; Figuren * <br> – – – | 1,5 | |
| A | DE-A-1 632 593 (AMERICAN MACHINE & FOUNDRY CO) <br> * Anspruch 1; Figuren * <br> – – – | 1 | |
| A | US-A-2 269 008 (COHEN) <br> * Anspruch 1; Figuren * <br> – – – – – | 1,2 | |

RECHERCHIERTE SACHGEBIETE (Int. Cl.5)

F 23 Q
B 60 N

Der vorliegende Recherchenbericht wurde für alle Patentansprüche erstellt

| Recherchenort | Abschlußdatum der Recherche | Prüfer |
|---|---|---|
| Den Haag | 11 Dezember 90 | VANHEUSDEN J. |